# EUROPEAN PATENT APPLICATION

(11) **EP 2 246 312 A2**
(43) Date of publication of application: **03.11.2010**
(21) Application number: 10160557.4
(22) Date of filing: 21.04.2010
(51) Int. Cl.: C03C 13/06, C03C 25/32, C03C 25/54, C03B 37/01, D04H 1/64, E04B 1/76

(54) **Insulation product article of mineral wool, raw mineral wool mat, and manufacturing methods for the same**

(30) Priority: 29.04.2009 FI 20095481
(71) Applicant: Paroc Oy Ab, 00621 Helsinki (FI)
(72) Inventor: Hjelt, Tuomo, 53850 Lappeenranta (FI); Sundberg, Pia, 20540 Turku (FI)
(74) Representative: LEITZINGER OY

(57) **Abstract**

One object of the invention is a method for manufacturing an insulation product article of mineral wool. In the method two binders A and B are added to the mineral wool in connection with and/or after the formation of mineral wool fibers making up a raw mineral wool mat, whereof at least the binder B, in order to become cured, requires heating to the specific curing temperature t_{B} thereof or higher, and that the binder A cures or is capable of being cured at a temperature t_{A}, which is lower than the curing temperature t_{B} (t_{A} < t_{B}), the raw mineral wool mat, containing two binders A and B, is pre-cured by heating it to a temperature t₁ which is lower than the curing temperature t_{B} of the binder B, such that t_{A} ≤ t₁ < t_{B}, whereby the binder A, which is capable of being cured at the lower curing temperature t_{A}, is the only one to become cured, and the curing of a shaped insulation product article, still containing uncured binder B, into a finished insulation product article of mineral wool is performed by heating the same to the curing temperature t_{B} of the binder B or higher, such that the binder B becomes cured. The invention relates also to an insulation product article of mineral wool, as well as to a raw mineral wool mat, which mainly consists of layered mineral wool fibers and lends itself to the manufacture of mineral wool products, especially shaped insulation product articles.

## Description

### Object of the invention

One object of this invention is an insulation product article of mineral wool, consisting mainly of mineral wool which has been cured.

A second object of this invention is a method for the manufacture of an insulation product article of mineral wool, said method comprising at least:
- forming mineral wool fibers,
- forming raw mineral wool in a mat form from the mineral wool fibers,
- adding a binder to the mineral wool in connection with and/or after the formation of mineral wool fibers making up the raw mineral wool mat,
- further processing the binder-containing raw mineral wool mat and shaping the same into an insulation product article, which is still uncured, and
- curing the shaped, still uncured insulation product article into a finished insulation product article.

In addition to the above, the invention also relates to a raw mineral wool mat, which mainly consists of layered mineral wool fibers and lends itself to the manufacture of mineral wool products, especially shaped insulation product articles.

A still further object of the invention is a method for the manufacture of a raw mineral wool mat of the invention, said method comprising at least:
- forming mineral wool fibers,
- forming raw mineral wool in a mat form from the mineral wool fibers,
- adding a binder to the mineral wool in connection with and/or after the formation of mineral wool fibers making up the raw mineral wool mat.

### Prior art

In the prior art, raw mineral wool in the form of a mat, i.e. a raw mineral wool mat, used for the manufacture of insulation products of mineral wool, such as e.g. mineral wool slabs or pipe sections, is manufactured on a so-called basic production line by using mineral melt to first form mineral wool fibers, from which via a primary mat of mineral wool (hereinafter just "primary mat") by folding a secondary mat of mineral wool (hereinafter just "secondary mat") is then formed. This way of producing so-called raw wool has been described e.g. in publications WO 94/16162, WO 96/38391 and WO 99/51535 (Rockwool Inc.), as well as in publications WO 2006/070055 and WO 03/008353 (Paroc).

A primary mat manufacturing process, which is included in the manufacture of a raw mineral wool mat, comprises first forming mineral wool fibers from mineral melt, followed by organizing the resulting fibers into a primary mat. In prior art, a bonding agent or binder is added to the mineral wool forming the primary mat in connection with and/or after the formation of the mineral wool fibers. Then, the "wet" or still uncured, binder-containing primary mat is further processed and shaped into an insulation product article, e.g. a pipe section, which is still uncured. The uncured insulation product article shall not be cured until it has adopted its final form (e.g. a pipe section whose binder is still wet). In the event that the binder has an individual specific curing temperature, the binder shall be cured by heating it to its curing temperature or higher. In the event that a binder cures at a temperature as low as room temperature, the curing can be expedited by heating.

The process of manufacturing shaped articles of mineral wool as described above nevertheless involves a drawback resulting from non-uniformity in the homogeneity of a raw mineral wool mat or so-called "raw wool". The non-homogeneity of raw wool has a deteriorating effect on the homogeneity of a final product, such as e.g. a pipe section. In addition to this, the prior art raw wool or raw mineral wool mat is awkward to handle.

### Description of the invention

An objective of the present invention is to alleviate or even totally eliminate the foregoing prior art drawbacks.

In order to achieve this, an insulation product article of mineral wool according to the invention is characterized by containing two cured binders A and B, which have been cured respectively at different curing temperatures t_{A} and t_{B}, whereby t_{B} > t_{A}.

In one preferred embodiment of an insulation product article of the invention, the binder A, which has been cured at the lower curing temperature t_{A}, is polyvinyl alcohol, polyvinyl acetate or polyurethane or the like, and the binder B, which has been cured at the higher curing temperature t_{B}, is an organic or inorganic binder, the organic binder being preferably selected from a group including phenolformaldehyde-, acrylic- and epoxy-based binders, and the inorganic binder being preferably a water glass based binder. The binder A, which cures at a lower curing temperature t_{A}, may also be an inorganic binder as long as t_{A} < t_{B}.

In an insulation product article of the invention, the amount of each binder A and B is preferably 0.5-5% by weight of the cured mineral wool in a finished insulation product article. However, it is obvious to the skilled person that the amount of each binder can also be less than 0.5% (yet > 0%) or more than 5%, but preferably not more than 15% by weight of the cured mineral wool. However, the finished insulation product article of the invention preferably contains altogether not more than 5% of one or more organic compounds in order to provide a fireproof finished insulation product article.

To the mineral wool of an insulation product article can further be added binder additives for enhancing the performance of either or both binders.

Notable examples of such additives include silanes for improving adhesion, stabilizers for improving UV-stability, and surfactants.

A method of the invention for the manufacture of an insulation product article of mineral wool is **characterized in that**
- two binders A and B are added to the mineral wool in connection with and/or after the formation of mineral wool fibers making up a raw mineral wool mat, whereof at least the binder B, in order to become cured, requires heating to its specific curing temperature t_{B} or higher, and that the binder A cures or is capable of being cured at a temperature t_{A}, which is lower than the curing temperature t_{B} (t_{A} < t_{B})
- the raw mineral wool mat, containing two binders A and B, is pre-cured by heating it to a temperature t₁ which is lower than the curing temperature t_{B} of the binder B, such that t_{A} ≤ t₁ < t_{B}, whereby the binder A, which is capable of being cured at the lower curing temperature t_{A}, is the only one to become cured, and
- the curing of a shaped insulation product article, still containing uncured binder B, into a finished insulation product article of mineral wool is performed by heating the same to the curing temperature t_{B} of the binder B or higher, such that the binder B becomes cured.
   In the method of the invention for manufacturing an insulation product article of mineral wool, it is preferred that the binder B, which requires the higher curing temperature t_{B}, be added to the mineral wool near the mineral melt into the already formed mineral wool fibers but prior to the formation of a primary mat, and that the binder A, which requires the lower curing temperature t_{A}, be added into the mineral wool after the formation of mineral wool fibers.
   In the method of the invention for manufacturing an insulation product article of mineral wool, it is preferred that the employed binder A, which requires the lower curing temperature t_{A}, be polyvinyl alcohol, polyvinyl acetate or polyurethane. Hence, it is preferred that the binder A, which requires the lower curing temperature t_{A}, be cured by heating it to a temperature t₁, which is 20-140°C, whereby the curing of the binder A is expedited accordingly.
   In the method of the invention for manufacturing an insulation product article of mineral wool, it is further preferred that the employed binder B, which requires the higher curing temperature t_{B}, be an organic or inorganic binder, the organic binder being preferably selected from a group including phenol-formaldehyde-, acrylic- and epoxy-based binders, and the inorganic binder being preferably a water glass based binder. Hence, it is preferred that the binder B, which requires the higher curing temperature t_{B}, be cured by heating the mineral wool to or higher than the temperature of 150°C.
   Raw wool or a raw mineral wool mat of the invention is characterized by containing two binders A and B, whereof at least the binder B, in order to become cured, requires heating to the specific curing temperature t_{B} thereof or higher, and that the binder A cures or is capable of being cured at a temperature t_{A} which is lower than the curing temperature t_{B} of the binder B (t_{A} < t_{B}), and of which binders, the binder A, which requires the lower curing temperature t_{A}, has been cured, and the binder B, which requires the higher curing temperature t_{B}, is still uncured.
   A method of the invention for manufacturing a raw mineral wool mat or "raw wool" is **characterized in that**
- two binders A and B are added to the mineral wool in connection with and/or after the formation of mineral wool fibers making up a raw mineral wool mat, whereof at least the binder B, in order to become cured, requires heating to the specific curing temperature t_{B} thereof or higher, and that the binder A cures or is capable of being cured at a temperature t_{A}, which is lower than the curing temperature t_{B} of the binder B (t_{A} < t_{B})
- the raw mineral wool mat, containing two binders A and B, is cured by heating it to a temperature t₁ which is lower than the curing temperature t_{B} of the binder B, such that t_{A} ≤ t₁ < t_{B}, whereby the binder A, which is capable of being cured at the lower curing temperature t_{A}, is the only one to become cured, thus providing a raw mineral wool mat in which the binder B is still uncured.

In the context of this invention, the terms "raw mineral wool mat" and "raw wool" are used in reference to a mat in the form of both a primary mat and a secondary mat. Thus, the significance of this is that, according to the invention, it is possible to manufacture an insulation product article, such as e.g. a pipe section, either from a secondary mat or directly from a primary mat. In the event that e.g. a pipe section is manufactured directly from a primary mat, this will be performed by rolling up the pipe section mat directly from the primary mat.

### Detailed description of the invention

The invention will now be described in more detail with reference to the following example, which nevertheless should not be construed as anything that would limit the scope of protection defined in the appended claims.

### A WORKING EXAMPLE

This example deals with manufacturing a pipe section of mineral wool either from a secondary mat or directly from a primary mat.

Mineral raw material or rock is smelted and worked in a per se known manner into mineral wool fibers, which are then gathered on a collection drum for making a primary mat.

In the formation process of mineral wool fibers, more specifically about 10 cm downstream from where the fibers begin to develop from mineral melt but before the fibers begin depositing on the collection drum as a primary mat, an addition of polyvinyl alcohol and urea-modified phenol formaldehyde resin as binders is made within the mineral wool fibers. Polyvinyl alcohol cures at a temperature as low as room temperature, but by raising the temperature, e.g. to 60°C, the curing of polyvinyl alcohol can be expedited. On the other hand, urea-modified phenol formaldehyde resin has its specific curing temperature t_{B}, which is 160°C, whereby polymerization begins.

The addition of each binder into the mineral wool fibers is adapted to take place concurrently from two separate nozzles, which are mounted in the vicinity of fiber formation at a substantially common crosswise level, close to mineral wool melt, in the direction of a production line. In one optional solution, the polyvinyl alcohol capable of being cured at the lower temperature t_{A} (as low as room temperature) is not added into mineral wool until after the formation of mineral wool fibers, e.g. by means of nozzles disposed on either side of a primary mat, or alternatively, in case a pipe section is manufactured from a secondary mat, by means of nozzles disposed on either side of the secondary mat.

A raw mineral wool mat (either a primary or secondary mat), among whose mineral wool has been added both polyvinyl alcohol and urea-modified phenol formaldehyde resin, is cured, after the addition of both binders, by bringing the raw mineral wool mat e.g. to 60°C for speeding up the curing of polyvinyl alcohol. As soon as the polyvinyl alcohol has become cured, the raw mineral wool mat can be rolled up into a roll and carried to a pipe section forming machine for pipe section shaping.

The pipe section forming machine is used for shaping a rolled-up raw mineral wool mat (i.e. either a primary or secondary mat as pointed out before) in a per se known manner into a pipe section, which, after adopting its shape, is cured into a finished pipe section by bringing the pipe section preform, containing wet urea-modified phenol formaldehyde resin, to a temperature range of 180-280°C, e.g. to a temperature of 200°C, for curing the binder B.

To the mineral wool of an insulation product article can further be added binder additives for enhancing the performance of either or both binders. Notable examples of such additives include, as well known to a person skilled in the art, silanes for improving adhesion, stabilizers for improving UV-stability, as well as surfactants.

## Claims

1. An insulation product article of mineral wool, consisting mainly of mineral wool which has been cured, **characterized by** containing two cured binders A and B, which have been cured respectively at different curing temperatures t_{A} and t_{B}, whereby t_{B} > t_{A}.

2. An insulation product article according to claim 1, **characterized in that** the binder A, which has been cured at the lower curing temperature t_{A}, is polyvinyl alcohol, polyvinyl acetate or polyurethane or the like, and the binder B, which has been cured at the higher curing temperature t_{B}, is an organic or inorganic binder, the organic binder being preferably selected from a group including phenol-formaldehyde-, acrylic- and epoxy-based binders, and the inorganic binder being preferably a water glass based binder.

3. An insulation product article according to claim 1 or 2, **characterized in that** the amount of each binder A and B is 0.5-5% by weight of the finished insulation product article.

4. An insulation product article according to any one of the claims 1-3, **characterized in that**, with respect to its weight, the finished insulation product article contains altogether not more than 5% of one or more organic compounds.

5. A method for manufacturing an insulation product article of mineral wool, said method comprising at least:
- forming mineral wool fibers,
- forming raw mineral wool in a mat form from the mineral wool fibers,
- adding a binder to the mineral wool in connection with and/or after the formation of mineral wool fibers making up the raw mineral wool mat,
- further processing the binder-containing raw mineral wool mat and shaping the same into an insulation product article, which is still uncured, and
- curing the shaped, still uncured insulation product article into a finished insulation product article,
**characterized in that**
- two binders A and B are added to the mineral wool in connection with and/or after the formation of mineral wool fibers making up a raw mineral wool mat, whereof at least the binder B, in order to become cured, requires heating to its specific curing temperature t_{B} or higher, and that the binder A cures or is capable of being cured at a temperature t_{A}, which is lower than the curing temperature t_{B} (t_{A} < t_{B})
- the raw mineral wool mat, containing two binders A and B, is pre-cured by heating it to a temperature t₁ which is lower than the curing temperature t_{B} of the binder B, such that t_{A} ≤ t₁ < t_{B}, whereby the binder A, which is capable of being cured at the lower curing temperature t_{A}, is the only one to become cured, and
- the curing of a shaped insulation product article, still containing uncured binder B, into a finished insulation product article of mineral wool is performed by heating the same to the curing temperature t_{B} of the binder B or higher, such that the binder B becomes cured.

6. A method according to claim 5, **characterized in that** the binder B, which requires the higher curing temperature t_{B} to become cured, is added to the mineral wool near the mineral melt into mineral wool fibers already formed, but prior to the formation of a primary mat, and the binder A, which requires the lower curing temperature t_{A} to become cured, is added into the mineral wool after the formation of mineral wool fibers.

7. A method according to claim 5 or 6, **characterized in that** the employed binder A, which requires the lower curing temperature t_{A}, is polyvinyl alcohol, polyvinyl acetate or polyurethane.

8. A method according to any one of the claims 5-7, **characterized in that** the employed binder B, which requires the higher curing temperature t_{B}, is an organic or inorganic binder, the organic binder being selected from a group including phenolformaldehyde-, acrylic- and epoxy-based binders, and the inorganic binder is a water glass based binder.

9. A method according to claim 7 or 8, **characterized in that** curing of the binder A, which requires the lower curing temperature t_{A}, is performed by heating to a temperature t₁, which is 20-140°C.

10. A method according to any one of the claims 7-9, **characterized in that** curing of the binder B, which requires the higher curing temperature t_{B}, is performed by heating to a temperature of 150°C or higher.

11. A raw mineral wool mat, which mainly consists of layered mineral wool fibers and is suitable for the manufacture of mineral wool products, especially shaped insulation product articles, **characterized by** containing two binders A and B, whereof at least the binder B, in order to become cured, requires heating to the specific curing temperature t_{B} thereof or higher, and that the binder A cures or is capable of being cured at a temperature t_{A} which is lower than the curing temperature t_{B} of the binder B (t_{A} < t_{B}), and of which binders, the binder A, which requires the lower curing temperature t_{A}, has been cured, and the binder B, which requires the higher curing temperature t_{B}, is still uncured.

12. A raw mineral wool mat according to claim 11, **characterized by** being rolled-up as a roll.

13. A method for manufacturing a raw mineral wool mat according to claim 11, said method comprising at least:
- forming mineral wool fibers,
- forming raw mineral wool in a mat form from the mineral wool fibers,
- adding a binder to the mineral wool in connection with and/or after the formation of mineral wool fibers making up the raw mineral wool mat,
**characterized in that**
- two binders A and B are added to the mineral wool in connection with and/or after the formation of mineral wool fibers making up a raw mineral wool mat, whereof at least the binder B, in order to become cured, requires heating to the specific curing temperature t_{B} thereof or higher, and that the binder A cures or is capable of being cured at a temperature t_{A}, which is lower than the curing temperature t_{B} of the binder B (t_{A} < t_{B})
- the raw mineral wool mat, containing two binders A and B, is cured by heating it to a temperature t₁ which is lower than the curing temperature t_{B} of the binder B, such that t_{A} ≤ t₁ < t_{B}, whereby the binder A, which is capable of being cured at the lower curing temperature t_{A}, is the only one to become cured, thus providing a raw mineral wool mat in which the binder B is still uncured.
